# EUROPEAN PATENT SPECIFICATION

(11) **EP 1 889 652 B1**
(45) Date of publication and mention of the grant of the patent: **07.08.2013**
(21) Application number: 07016161.7
(22) Date of filing: 17.08.2007
(51) Int. Cl.: B01D 65/02, B01D 61/12, B01D 61/22, C02F 1/46

(54) **Method for separating constituents from a liquid**
Verfahren zum Trennen der Komponenten einer Flüssigkeit
Procédé de séparation de constituants d'un liquide

(30) Priority: 18.08.2006 NL 1032346
(43) Date of publication of application: 20.02.2008
(73) Proprietor: Vitens N.V., 8019 BE Zwolle (NL)
(72) Inventor: Bakker, Simon Marinus, 8016 HX Zwolle (NL); van der Meer, Walterus Gijsbertus Joseph, 8604 VM Sneek (NL)
(74) Representative: Blokland, Arie

(56) References cited:
- WO-A-01/26768
- WO-A-02/051874
- US-A- 3 990 968
- US-A- 5 064 515
- US-B1- 6 463 790
- S.N. JAGANNADH AND H.S. MURALIDHARA: "Electrokinetics methods to control membrane fouling" IND. ENG. CHEM. RES., vol. 35, no. 4, 1996, pages 1133-1140, XP002430263

## Description

The present invention relates to a method for separating constituents from a liquid, wherein said liquid is passed along the surface of a membrane as a feed flow and is separated into a concentrate flow and a permeate flow.

Such a method is known per se from US patent No. 6,592,763 granted to the present applicant. According to the method that is known therefrom, the effluent flow from a bioreactor is supplied to an ultrafiltration unit and separated into a permeate flow and a concentrate flow therein, and the permeate flow from the ultrafiltration unit is supplied to a membrane filtration unit and separated into a product flow and a discharge flow therein, which discharge flow is returned to the bioreactor.

German Offenlegungsschrift DE 198 06 796 relates to a membrane filtration device, in which a supply pipe is arranged upstream of the membrane filtration unit, in which supply pipe a magnetic field is generated in the liquid present therein, said supply pipe being provided with two electromagnets on the outer side thereof. It is assumed that the magnetic field that is applied induces the disintegration of the crystals present in the liquid, with the crystals thus disintegrated being captured by means of a sand filter.

US patent application US 2005/0211638 relates to an installation for treating effluent flows by using pulsed electric fields, which is claimed to result in physicochemical and biologic modification of the aqueous medium to be treated. The pulsed electric field is in particular claimed to have a biologic (cell destruction), a physical (increased dimensions of compounds in solution) and a chemical (mineralisation of chlorine) effect on the effluent to be treated.

US patent application US 2002/0148761 relates to the use of at least one electrode positioned in a flowing fluid, which flowing liquid comprises unwanted substances. The electrode is energized electrically to provide current flow in the fluid to produce a sufficient amount of electrical power in the flowing fluid to cause substances in the fluid to be disturbed for effectively treating the fluid. The voltage used for that purpose ranges between -30 and 15 Volt.

International application WO 98/30501 relates to a method for applying a fluctuating magnetic field to a liquid to be treated, which magnetic field is intended to maintain the so-called Eddy currents. Said publication is in particular aimed at subjecting the water to be treated to a fluctuating magnetic field in a desalinization plant in order to thus enhance the performance of such a plant.

The article "Electrokinetics methods to control membrane fouling" by S.N. Jagannadh and H.S. Muralidhara, Ind. Eng. Chem. Res., 1996, 35, 1133-1140 relates to the use of an electric field via a cathode and an anode in the case of membrane fouling, which electric field leads to the formation of gases as a result of the electrolytic process being initiated, which gases thus formed exhibit a so-called "sweeping" effect on the membrane surface, which, according to the article, keeps the membrane surface clean. The technology discussed in said article thus relates to electrolytic processes, as well as to electrophoresis and electro-osmosis.

US patent No. 6,463,790 relates to a membrane filtration apparatus for continuously monitoring membrane fouling during the filtration process.

US patent No. 6,294,137 relates to the electrostatic treatment of liquid systems, wherein an electric current is generated in a flowing liquid for the purpose of treating said liquid so as to prevent fouling of domestic and industrial pipe systems.

In membrane systems of the above type, substances frequently adhere to the membrane surface. The micro-organisms present in the aqueous flow to be treated are living cells, which can grow because of the presence of the biodegradable substances present in the aqueous flow. Thus the so-called biofouling potential is determined by the micro-organisms and the concentration of nutrients. After all, if the aqueous flow does not contain any nutrients, the micro-organisms cannot keep themselves alive, and thus a biofilm will not form on the membrane surface. Biofouling problems will generally manifest themselves in membrane systems in the form of an increased trans-membrane pressure. However, such a change in the trans-membrane pressure may also be caused by other fouling mechanisms. It is also possible to take water samples, which can be subjected to colony measurements or cell count measurements, whilst in addition a number of the micro-organisms found in the aqueous flow can be identified. However, these data cannot be related to the location of the biofilm growth, because the cells present in the aqueous flow may originate from any location within the system, including the membranes. Another possibility is to take samples from the membrane surfaces themselves, in which case biofilm samples must be taken from an operative membrane by means of a destructive method. Other, more recent approaches include the use of optical sensors, but also of other sensors, which are integrated in a membrane module and which can detect the development of deposition material on surface from an increase in the light reflection. In practice a so-called by-pass membrane arrangement is also used, from which membranes can be removed and be examined by means of a destructive method for the purpose of thus detecting any biofouling.

One approach for preventing biofouling problems is the use of biocides. The underlying idea is that if micro-organisms are the cause of the problem, it is desirable that said micro-organisms be killed. In practice this approach has a few serious drawbacks, however, because it is a known fact that the biofilm organisms may exhibit a very high resistance to biocides, so that treatment with biocides will not lead to the desired removal of the biofouling layer. A cleaning strategy for membrane surfaces that is thus frequently used is the use of a process comprising two steps, viz. first the fouling layer is weakened (which is usually done by means of cleaning agents), and then the fouling layer is removed, which is usually done by applying shearing forces, i.e. a combination of chemical and mechanical or hydraulic cleaning methods is used. Another possibility is to reduce the growth potential of the feed flow to be separated, in particular by reducing the percentage of assimilable organic carbon (AOC). Furthermore it is known to add chemicals to the feed flow, which chemicals adhere to the constituents to be separated or cause the constituents to be separated to form a conglomeration of constituents, thereby additionally preventing such constituents from passing the membrane. The addition of an extra amount of chemicals is undesirable, however, for environmental and economic reasons.

The object of the present invention is to provide a method by which biofouling of a membrane can be reduced or even prevented.

Another object of the present invention is to provide a method wherein the prevailing conditions on the membrane can be influenced to such an extent that the formation and adherence of a biofilm in or to the membrane surface is seriously impeded.

Yet another object of the present invention is to provide a method for separating constituents from a liquid, using a membrane, which method makes it possible to influence the retention properties of the membrane.

According to the present invention, the method is characterised by the characterising part of claim 1.

One or more of the above objects can be accomplished by carrying out the aforesaid measures. The surface charge of the membrane is retained after the electrostatic field has been induced, which means that the permeate flow must be isolated from earth. Thus, the potential set will also be the potential that is actually experienced by the liquid. The potential must therefore be assessed in relation to the charge of the permeate flow. In such a situation charge transport takes place, but no current passage as in the case of electrolytic processes. The present invention relates to influencing the surface charge of the membrane by inducing an electrostatic field in the membrane itself.

The present inventors have found that in particular interaction between ions, molecules and particles in the aqueous phase and the charge on the membrane surface and in the pores and/or nanostructures play an important part in separation processes in which membranes are used. In the case of separation processes in which membranes are used, the separation is not exclusively based on pore size and/or nanostructures of a membrane. The present inventors assume that the surface charge of a membrane plays an important part in the growth of the biofilm, in which connection the charge of a membrane can be regarded as being dependent inter alia on the membrane material, the composition of the aqueous flow to be separated and the interaction of the ions, the molecules and the charged particles with the membrane surface, including the pores and the nanostructures. By inducing an electrostatic field near the membrane, in particular by placing an element that effects such an induction on the permeate side of the membrane, thereby influencing the surface charge of the membrane, the retention properties, viz. the stopping of specific constituents, is influenced. Furthermore, the adherence of specific constituents to the membrane surface will be influenced, making it possible to stabilise or even reduce the formation of biofilms. The present invention is in particular suitable for keeping charged colloids away from the membrane surface, in particular by setting the charge on the membrane surface such that repulsion takes place. If the contaminating constituents are regarded as negatively charged particles, the surface charge of the membrane will be made negative by inducing an electrostatic field in the membrane, making it more difficult for such particles to adhere thereto. In this way it is achieved that high-molecular material, for example humic acid, is retained. An additional advantage is, therefore, that it is possible to reduce the amount of flocculant. The feed flow may take place in a direction perpendicular to or in a direction parallel to the membrane surface, or in a combination of the two directions.

It is in particular preferable if the electrostatic field has a positive or a negative charge, and in a special embodiment the electrostatic field may be alternately made positive and negative. The selection of the desired charge on the membrane surface is determined by the charge of the constituents that will normally settle on and in the membrane surface. In the case of negatively charged constituents, is will thus be necessary to give the membrane surface a negative charge. If a magnetic field is applied, the field lines thereof will have to be oriented in such a manner that the surface charges of the membrane surface will have a repellent effect on the constituents in the liquid to be separated, thus minimising the extent to which such constituents will adhere in or to the membrane surface.

The electrostatic field used in the present invention comprises a voltage range of 2000 - 3000 V. If a voltage range of less than 50 V is used, the electrostatic field formed on the membrane will be insufficient, so that it will hardly be possible to accomplish any one of the present objectives. The use of a voltage range of more than 10,000 V makes heavy demands on the equipment that is used and furthermore increases the risk of voltage breakdown.

The present inventors have found that an important parameter for controlling and measuring the surface charge is the flow potential, measured across the feed flow and the permeate flow. If the flow potential is thus measured, the measured flow potential provides a control signal by means of which one or more of the following parameters of the electrostatic field selected from the group comprising polarity, voltage and frequency of polarity change, or a combination thereof, can be controlled, in particular if the measured signal is different from a desired reference signal. Said control is carried out by means of an electronic control unit with associated software.

The present inventors have furthermore found that the surface charge of the membrane can be strongly influenced by inducing a positively or negatively charged electrostatic field, as a result of which an effect is observed on the electric double layers, the ions, the molecules and the charged particles. The permeability and the retention properties of the membrane are thus improved. In addition, the extent of fouling on the membrane will be controlled and stabilised, or such fouling will even be prevented altogether.

The membrane is selected from the group comprising microfiltration, ultrafiltration, nanofiltration and hyperfiltration, and the membrane is of a type selected from the group comprising tubular module, flat sheet module and spiral wound module. The membrane is of organic or inorganic origin, or liquid-based.

In a special embodiment it is furthermore desirable to measure the pH-value of the feed flow, which pH-value provides a control signal by means of which one or more of the aforesaid parameters of the electrostatic field can be controlled. The pH-value thus functions as a kind of feedback signal for controlling and maintaining the electrostatic field that is required at that point in time, in particular as regards the polarity and strength thereof.

The present inventors have furthermore found that instead of the aforesaid pH-value also the conductivity and the zeta potential of the feed flow can function as control signals by means of which one or more of the aforesaid parameters of the electrostatic field can be controlled. For example, if a decrease of constituents is thus detected in the feed flow, it is subsequently possible to adjust the electrostatic field and/or the magnetic field.

In a special embodiment it is also possible to measure the TSS (total suspended solids) value of the feed flow, in particular in the case of a dead-end filtration, which TSS-value provides a control signal by means of which one or more of the following parameters of the electrostatic field selected from the group comprising polarity, voltage and frequency of polarity change, or a combination thereof, can be controlled. The measurement by which the TSS-value is established, which in fact provides an insight into the particle load on the membrane, not only provides information about the intended surface charge on the membrane, but also about the process conditions under which the module can be loaded, such as the total runtime of the membrane module, viz. the time during which the module can be operated until a cleaning operation needs to be carried out, such as backflushing with an aqueous solution.

It will be understood that in specific embodiments a combination of conductivity, pH-value, zeta-potential and TSS-value may be used for influencing the surface charge on the membrane.

The present inventors assume that it is possible, using the present method, to remove colour from an aqueous flow by means of ultrafiltration.

A device for separating constituents from a liquid, wherein said liquid is passed along the surface of a membrane as a feed flow and is separated into a concentrate flow and a permeate flow, is a device comprising the required supply and discharge channels, pipes, valves and pumps, wherein an element for inducing an electrostatic field is present on the permeate side of the membrane, which element is capable of influencing the surface charge of the membrane. In such a device it is preferable if the element is capable of generating an electrostatic field in the range of 50 - 10,000 V, with the membrane being of a type selected from the group comprising tubular module, flat sheet module and spiral wound module, in particular being liquid-based or of organic or inorganic origin.

The present invention will now be explained by means of a number of examples, in which connection it should be noted, however, that the present invention is by no means limited to such special examples.
Figure 1 is a side elevation of a membrane of the flat sheet module type.
Figure 2 is a front elevation of a tubular membrane.

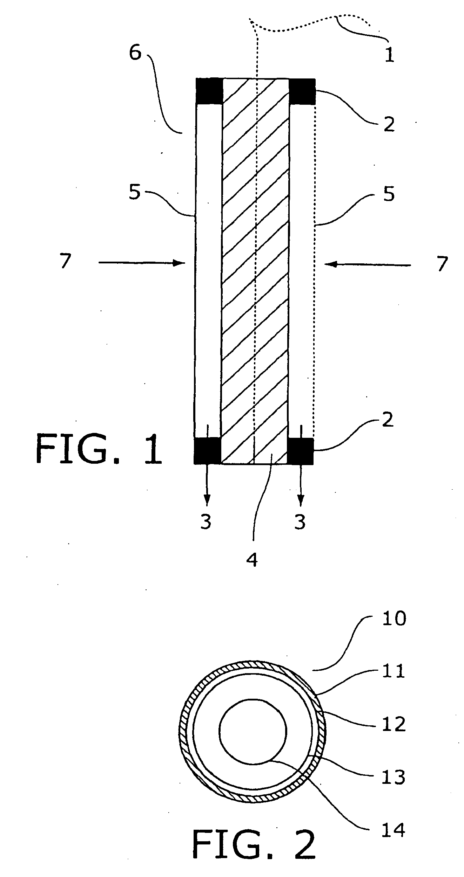

Figure 1 schematically shows in side elevation a VLC flat membrane module 6, in which the feed flow 7 to be separated is supplied in a direction transversely to the membrane 5, after which a permeate flow 3 is drawn from the module 6. The module 6 is so configured that the electrode 1, which extends substantially parallel to the membrane 5, is surrounded by an insulator 4, which insulator 4 is in contact with the permeate flow 3. The membrane 5 is spaced from the insulator 4 by means of a spacer 2 at both end faces. The retention properties of the membrane 5 are advantageously influenced by applying a voltage to the electrode 1, which voltage induces an electrostatic field on the membrane 5, thus creating inter alia conditions disadvantageous to the formation of a biofilm on the membrane 5. Because the electrode 1 extends along substantially the entire length of the membrane 5, the surface charge is influenced over the entire membrane surface. In a special embodiment it is possible to carry out a measurement of the pH-value, the conductivity, the zeta potential and/or the TSS-value in the feed flow 7, thereby providing a control signal which controls the setting of the electrode 1, in particular the magnitude of the electrostatic field, via an electronic measurement and control system (not shown).

Figure 2 schematically shows a front elevation of a VCL membrane 10 of the tubular type, by which a so-called inside-out filtration is carried out. The feed flow is separated in a permeate flow via membrane 14, which permeate flow is discharged via the annular space formed between the membrane 14 and the permeate tube 13. An induction of the electrostatic field on the membrane 14 takes place by using an insulated conductive layer or coil 12, which layer 12 is concentrically arranged around the membrane 14 and the permeate tube 13. The insulated conductive layer or coil 12 is insulated by means of an insulator 11. The surface charge on the membrane 14 is influenced inter alia by the magnitude of the voltage applied to the insulated conductive layer or coil 12.

It is also possible to place electromagnets on the outer side of an existing standard tubular membrane module, for example four electromagnets arranged in opposite pairs. Activation of said electromagnets will cause an electromagnetic field to orient itself towards the centre of the module, thereby inducing a magnetic field on the membrane surface. Using such a construction, it is possible to generate alternating N-S poles.

## Claims

1. A method for separating constituents from a liquid, wherein said liquid is passed along the surface of a membrane (5,14) as a feed flow (7) and is separated Into a concentrate flow and a permeate flow (3), **characterized In that** the surface charge of the membrane is Influenced by inducing an electrostatic field in the membrane, said induction is carried out by placing an element for inducing an electrostatic field on the permeate side of the membrane (5, 14) wherein the surface change of said membrane is retained after the electrostatic field has been induced by isolating the permeate flow from earth such that no current passage takes place, wherein said electrostatic field comprises a voltage range of 2000- 3000 V.

2. A method according to claim 1, charecterised In that said electrostatic field has a positive charge.

3. A method according to claim 1, **characterised In that** said electrostatic field has a negative charge.

4. A method according to claim 1, **characterised In that** said electrostatic field is alternately positive and negative.

5. A method according to any one or more of the preceding claims, **characterised in that** the surface charge is influenced over the entire membrane surface.

6. A method according to any one or more of the preceding claims **characterised In that** the flow potential across the feed flow (7) and the permeate flow (3) is measured, which flow potential provides a control signal by means of which one or more of the following parameters of the electrostatic field selected from the group comprising polarity, voltage and frequency of polarity change, or a combination thereof, is/are controlled.

7. A method according to any one or more of the preceding claims, **characterised in that** the ph-value of the feed flow (7) is measured, which ph-value provides a control signal by means of which one or more of the followlng parameters of the electrostatic field selected from the group comprising polarity, voltage and frequency of polarity change, or a combination thereof, is/are controlled.

8. A method according to any one or more of the preceding claims, **characterised In that** the conductivity of the feed flow (7) is measured, which conductivity provides a control signal by means of which one or more of the following parameters of the electrostatic field selected from the group comprising polarity, voltage and frequency of polarity change, or a combination thereof, is/are controlled.

9. A method according to any one or more of the preceding claims **characterised In that** the TSS (total suspended solids) value of the feed flow (7) is measured, which TSS-value provides a control signal by means of which one or more of the following parameters of the electrostatic field selected from the group comprising polarity, voltage and frequency of polarity change, or a combination thereof, is/are controlled.

10. A method according to any one or more of the preceding claims, **characterised In that** the zeta potential of the feed flow (7) is measured, which zeta potential provides a control signal by means of which one or more of the following parameters of the electrostatic field selected from the group comprising polarity, voltage and frequency of polarity change, or a combination thereof, is/are controlled.

11. A method according to any one or more of the preceding claims, **characterized in that** the membrane (5,14) is selected from the group comprising microfiltration, ultrafiltration, nanofiltration and hyperfiltration.

12. A method according to any one or more of the preceding claims, **characterised in that** the membrane (5,14) is of a type selected from the group comprising tubular module, flat sheet module and spiral wound module.

13. A method according to any one or more of the preceding claims, chareaterised in that the membrane (5,14) is liquid-based or of organic or inorganic origin.

## Patentansprüche

1. Verfahren zum Trennen von Bestandteilen von einer Flüssigkeit, wobei die Flüssigkeit als Zufluss (7) entlang der Oberfläche einer Membran (5, 14) geführt wird und in einen Konzentratfluss und einen Permeatfluss (3) getrennt wird, **dadurch gekennzeichnet, dass** die Oberflächenladung der Membran durch Induzieren eines elektrostatischen Feldes in der Membran beeinflusst wird, und die Induktion dadurch verwirklicht wird, dass ein Element zum Induzieren eines elektrostatischen Feldes an der Permeatseite der Membran (5, 14) angeordnet ist, wobei die Oberflächenladung der Membran, nachdem das elektrostatische Feld induziert wurde, dadurch beibehalten wird, dass der Permeatfluss derart von der Erde isoliert ist, dass kein Stromdurchgang stattfindet, wobei das elektrostatische Feld einen Spannungsbereich von 2000 - 3000 V aufweist.

2. Verfahren nach Anspruch 1, **dadurch gekennzeichnet, dass** das elektrostatische Feld eine positive Ladung hat.

3. Verfahren nach Anspruch 1, **dadurch gekennzeichnet, dass** das elektrostatische Feld eine negative Ladung hat.

4. Verfahren nach Anspruch 1, **dadurch gekennzeichnet, dass** das elektrostatische Feld abwechselnd positiv und negativ ist.

5. Verfahren nach einem oder mehreren der vorhergehenden Ansprüche, **dadurch gekennzeichnet, dass** die Oberflächenladung über die gesamte Membranoberfläche beeinflusst wird.

6. Verfahren nach einem oder mehreren der vorhergehenden Ansprüche, **dadurch gekennzeichnet, dass** das Flusspotential über den Zufluss (7) und den Permeatfluss (3) gemessen wird, und das Flusspotential ein Steuersignal bereitstellt, anhand dessen einer oder mehrere der folgenden Parameter des elektrostatischen Feldes gesteuert werden, die aus der aus Polarität, Spannung und Frequenz des Polaritätswechsels oder einer Kombination davon umfassenden Gruppe ausgewählt sind.

7. Verfahren nach einem oder mehreren der vorhergehenden Ansprüche, **dadurch gekennzeichnet, dass** der pH-Wert des Zuflusses (7) gemessen wird, und der pH-Wert ein Steuersignal bereitstellt, anhand dessen einer oder mehrere der folgenden Parameter des elektrostatischen Feldes gesteuert werden, die aus der aus Polarität, Spannung und Frequenz des Polaritätswechsels oder einer Kombination davon umfassenden Gruppe ausgewählt sind.

8. Verfahren nach einem oder mehreren der vorhergehenden Ansprüche, **dadurch gekennzeichnet, dass** die Leitfähigkeit des Zuflusses (7) gemessen wird, und die Leitfähigkeit ein Steuersignal bereitstellt, anhand dessen einer oder mehrere der folgenden Parameter des elektrostatischen Feldes gesteuert werden, die aus der aus Polarität, Spannung und Frequenz des Polaritätswechsels oder einer Kombination davon umfassenden Gruppe ausgewählt sind.

9. Verfahren nach einem oder mehreren der vorhergehenden Ansprüche, **dadurch gekennzeichnet, dass** der Gesamtschwebstoffgehalt (TSS) des Zuflusses (7) gemessen wird, und der Gesamtschwebstoffgehalt (TSS) ein Steuersignal bereitstellt, anhand dessen einer oder mehrere der folgenden Parameter des elektrostatischen Feldes gesteuert werden, die aus der aus Polarität, Spannung und Frequenz des Polaritätswechsels oder einer Kombination davon umfassenden Gruppe ausgewählt sind.

10. Verfahren nach einem oder mehreren der vorhergehenden Ansprüche, **dadurch gekennzeichnet, dass** das Zetapotential des Zuflusses (7) gemessen wird, und das Zetapotential ein Steuersignal bereitstellt, anhand dessen einer oder mehrere der folgenden Parameter des elektrostatischen Feldes gesteuert werden, die aus der aus Polarität, Spannung und Frequenz des Polaritätswechsels oder einer Kombination davon umfassenden Gruppe ausgewählt sind.

11. Verfahren nach einem oder mehreren der vorhergehenden Ansprüche, **dadurch gekennzeichnet, dass** die Membran (5, 14) aus der Gruppe ausgewählt ist, die Mikrofiltration, Ultrafiltration, Nanofiltration und Hyperfiltration umfasst.

12. Verfahren nach einem oder mehreren der vorhergehenden Ansprüche, **dadurch gekennzeichnet, dass** die Membran (5, 14) von einer Art ist, die aus der Gruppe ausgewählt ist, die rohrförmige Module, Flachfolienmodule und spiralförmig gewundene Module umfasst.

13. Verfahren nach einem oder mehreren der vorhergehenden Ansprüche, **dadurch gekennzeichnet, dass** die Membran (5, 14) flüssigkeitsbasiert oder organischen oder anorganischen Ursprungs ist.

## Revendications

1. Procédé de séparation de constituants d'un liquide, dans lequel ledit liquide est passé le long de la surface d'une membrane (5, 14) sous la forme d'un flux d'alimentation (9) et est séparé en un flux de concentré et un flux de perméat (3), **caractérisé en ce que** la charge de surface de la membrane est influencée par induction d'un champ électrostatique dans la membrane, ladite induction étant effectuée par le placement d'un élément pour l'induction d'un champ électrostatique sur le côté de perméat de la membrane (5, 14), dans lequel la charge de surface de ladite membrane est retenue après l'induction du champ électrostatique par isolation du flux de perméat de la terre de sorte qu'aucun passage de courant n'intervienne, dans lequel ledit champ électrostatique comprend une plage de tension de 2000 à 3000 V.

2. Procédé selon la revendication 1, **caractérisé en ce que** ledit champ électrostatique a une charge positive.

3. Procédé selon la revendication 1, **caractérisé en ce que** ledit champ électrostatique a une charge négative.

4. Procédé selon la revendication 1, **caractérisé en ce que** ledit champ électrostatique est en alternance positif et négatif.

5. Procédé selon l'une quelconque des revendications précédentes, **caractérisé en ce que** la charge de surface est influencée sur toute la surface de membrane.

6. Procédé selon l'une quelconque des revendications précédentes, **caractérisé en ce que** le potentiel de flux à travers le flux d'alimentation (7) et le flux de perméat (3) est mesuré, lequel potentiel de flux fournit un signal de commande au moyen duquel un ou plusieurs des paramètres suivants du champ électrostatique sélectionnés dans le groupe se composant d'une polarité, une tension et une fréquence de changement de polarité ou une combinaison de celles-ci, sont commandés.

7. Procédé selon l'une quelconque des revendications précédentes, **caractérisé en ce que** la valeur de pH du flux d'alimentation (7) est mesurée, laquelle valeur de pH fournit un signal de commande au moyen duquel un ou plusieurs des paramètres suivants du champ électrostatique sélectionnés dans le groupe se composant d'une polarité, une tension et une fréquence de changement de polarité ou une combinaison de celles-ci, sont commandés.

8. Procédé selon l'une quelconque des revendications précédentes, **caractérisé en ce que** la conductivité du flux d'alimentation (7) est mesurée, laquelle conductivité fournit un signal de commande au moyen duquel un ou plusieurs des paramètres suivants du champ électrostatique sélectionnés dans le groupe se composant d'une polarité, une tension et une fréquence de changement de polarité ou une combinaison de celles-ci, sont commandés.

9. Procédé selon l'une quelconque des revendications précédentes, **caractérisé en ce que** la valeur de TSS (total des solides en suspension) du flux d'alimentation (7) est mesurée, laquelle valeur de TSS fournit un signal de commande au moyen duquel un ou plusieurs des paramètres suivants du champ électrostatique sélectionnés dans le groupe se composant d'une polarité, une tension et une fréquence de changement de polarité ou une combinaison de celles-ci, sont commandés.

10. Procédé selon l'une quelconque des revendications précédentes, **caractérisé en ce que** le potentiel zêta du flux d'alimentation (7) est mesuré, lequel potentiel zêta fournit un signal de commande au moyen duquel un ou plusieurs des paramètres suivants du champ électrostatique sélectionnés dans le groupe se composant d'une polarité, une tension et une fréquence de changement de polarité ou une combinaison de celles-ci, sont commandés.

11. Procédé selon l'une quelconque des revendications précédentes, **caractérisé en ce que** la membrane (5, 14) est sélectionnée dans le groupe se composant de microfiltration, ultrafiltration, nanofiltration et hyperfiltration.

12. Procédé selon l'une quelconque des revendications précédentes, **caractérisé en ce que** la membrane (5, 14) est d'un type sélectionné dans le groupe se composant d'un module tubulaire, un module en feuille plate et un module enroulé en spirale.

13. Procédé selon l'une quelconque des revendications précédentes, **caractérisé en ce que** la membrane (5, 14) est à base de liquide ou d'origine organique ou inorganique.
